# EUROPEAN PATENT APPLICATION

(11) **EP 3 269 996 A1**
(43) Date of publication of application: **17.01.2018**
(21) Application number: 15884306.0
(22) Date of filing: 27.04.2015
(51) Int. Cl.: F16F 1/38

(54) **SPHERICAL HINGE TYPE RUBBER ELASTIC ELEMENT**

(30) Priority: 10.03.2015 CN 201510104296
(71) Applicant: Zhuzhou Times New Material Technology Co., Ltd., Zhuzhou, Hunan 412007 (CN)
(72) Inventor: QU, Xiaobo, Zhuzhou Hunan 412007 (CN); LIU, Luyang, Zhuzhou Hunan 412007 (CN); ZHOU, Wei, Zhuzhou Hunan 412007 (CN); SUN, Haiyan, Zhuzhou Hunan 412007 (CN); GUO, Xiwen, Zhuzhou Hunan 412007 (CN)
(74) Representative: Elzaburu S.L.P.
(86) International application number: PCT/CN2015/077501
(87) International publication number: WO 2016/141623

(57) **Abstract**

A spherical hinge type rubber elastic element comprises a spindle (1), rubber (2) sleeved outside the spindle (1), and a jacket (3) sleeved outside the rubber (2). The length of the jacket (3) is greater than that of the rubber (2). The length of the rubber (2) is gradually increased from a side connected to the jacket (3) to a side connected to the spindle (1). By means of the design of the profile of the side surface of the rubber (2), the variable stiffness of the element can be implemented without forming holes, which can effective prevent the rubber (2) being bent and deformed, helps to increase the pre-compression of the product, and prevent generation of crackles of the rubber (2).

## Description

This application claims the benefit of priority to Chinese Patent Application No. 201510104296.6 titled "SPHERICAL HINGE TYPE RUBBER ELASTIC ELEMENT", filed with the Chinese State Intellectual Property Office on March 10, 2015, the entire disclosure of which is incorporated herein by reference.

### Field

The present application relates to the technical field of spherical hinge products, and particularly to a spherical hinge type rubber elastic element.

### Background

Spherical hinge products can achieve effects such as vibration damping, traction, flexible connection according to different installation positions and design functions in the loading operation process of a vehicle. In order to ensure the comfort of vehicle operation, it is required that the product has a small stiffness when the vehicle is under a small load (in normal operation). However, in order to ensure the reliability of vehicle operation, it is required that the product has an obviously increased stiffness when the vehicle is under a large load (when starting and braking) to limit the displacement timely. Therefore a spherical hinge, especially a traction spherical hinge, is required to have a certain degree of variable stiffness.

As rubber is apt to be torn under the action of a tensile load, radial deformation of a spherical hinge product must be controlled within a certain range, otherwise tensile fracture of the rubber is apt to occur. In order to prevent the occurrence of such phenomenon, after vulcanization of the product, pre-compression treatment is required to be performed on the product, making the rubber in a compressed state. The pre-compression amount of the product is designed according to the maximum deformation amount of the product during use, so that the occurrence of tensile fracture of rubber can be effectively prevented.

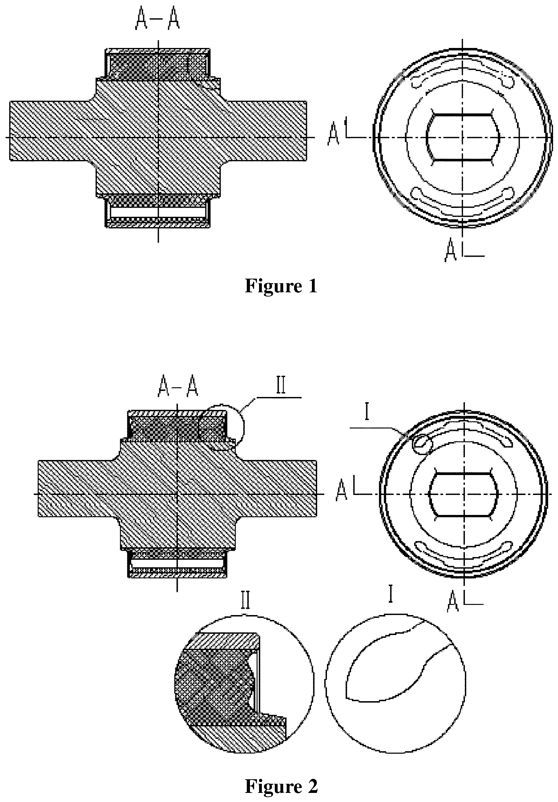

In order to meet the variable stiffness requirement of the spherical hinge product, the rubber of a conventional spherical hinge product is generally provided with a hole structure. As shown in Figure 1, the rubber at a holed portion is transitioned by a rounded corner, and the rubber at an end surface is designed to have a common vertically symmetrical structure. The size and clearance of the hole are designed according to stiffness requirements of the product.

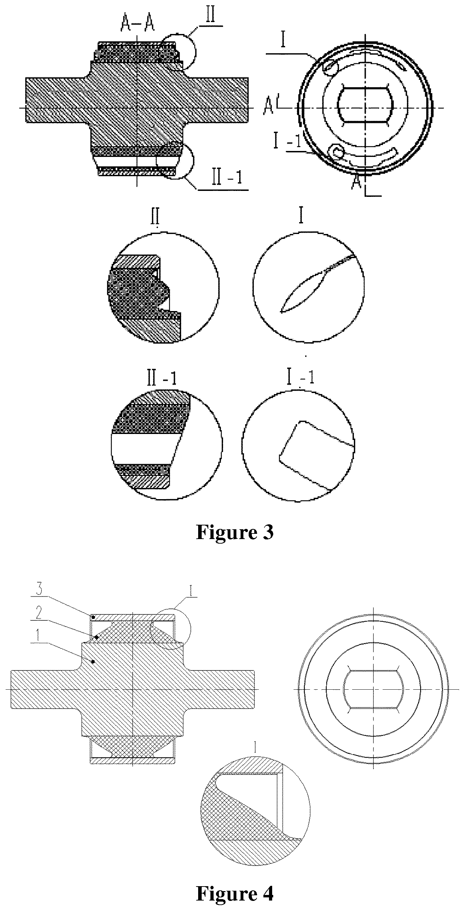

The profiles of rubber of a conventional structure is not ideally designed, and a free area of the rubber is small, therefore profiles at the end face and the holed portion of the rubber are apt to be bent and deformed in the case that the product is pre-compressed and loaded in a radial direction, thereby causing the rubber body of the product at the holed portion to be folded, as shown by portion I in Figures 2 and 3. The rubber at the end surface is crumpled and bulged, as shown by portion II in Figures 2 and 3, and finally the rubber is fractured due to stress concentration. Since the profiles of the rubber are apt to be bent and deformed, a series of chain problems are brought to the spherical hinge product. Since the profiles of the conventional structural rubber are apt to be bent and deformed, and bending deformation may become more serious as the pre-compression amount increases, the design of pre-compression amount is greatly limited. In order to reduce the influence of the bending deformation, the pre-compression amount of the product has to be decreased. In the conventional technology, the unilateral pre-compression amount generally does not exceed 10% of the thickness of the rubber. Since the design of pre-compression amount of the product is limited, the pre-compression amount of the actual product is less than the maximum deformation amount of the product during use, and the rubber at one end is in a tensioned state when a large deformation is generated in the case that the product is loaded, as shown by 1-1, II-2 in Figure 3, thereby causing the rubber to be subjected to tensile fracture. The contact area of the rubber surfaces is large meanwhile a certain specific deformation amount is presented, thus the stiffness may be increased suddenly, and sudden change of the stiffness is unfavorable for vibration damping effect of the product in a region near the deformation area.

### Summary

The technical issue to be addressed by the present application is to provide a spherical hinge type rubber elastic element. The spherical hinge type rubber elastic element according to the present application can prevent bending deformation of the rubber.

A spherical hinge type rubber elastic element is provided according to the present application, which includes a spindle; a rubber sleeved on the spindle; and a sleeve sleeved on the rubber. The length of the sleeve is greater than the length of the rubber, and the length of the rubber is increased gradually from a side connected to the sleeve to a side connected to the spindle.

Preferably, an angle between a side surface of the rubber and a surface of the sleeve is less than or equal to 45 degrees.

Preferably, an angle between the side surface of the rubber and a surface of the spindle ranges from 30 degrees to 70 degrees.

Preferably, the length of a surface, in contact with the sleeve, of the rubber ranges from 50% to 80% of the length of the sleeve.

Preferably, the length of a surface, in contact with the spindle, of the rubber is above 90% of the length of the spindle.

Preferably, a chamfer is provided at a portion, in contact with the sleeve, of the rubber and the size of the chamfer ranges from R0.5 to R4.

Preferably, the rubber is further provided with a hole structure.

Compared with the conventional technology, a spherical hinge type rubber elastic element is provided according to the present application, which includes a spindle, a rubber sleeved on the spindle, and a sleeve sleeved on the rubber. The length of the sleeve is greater than that of the rubber, and the length of the rubber is increased gradually from a side connected to the sleeve to a side connected to the spindle. According to the present application, with the above design of the side surfaces of the rubber, after the product is pre-compressed, the rubber on a side surface gets close to the sleeve parallelly, such that the clearance between the sleeve and the rubber is decreased gradually; in the case of being loaded radially, the rubber at the side surfaces continues to get close to the sleeve parallelly, and tightly abuts against the sleeve gradually, such that the clearance is eliminated gradually, and the contact area of the rubber in contact with the sleeve is increased gradually, thereby achieving the variable stiffness. Such design of the profile greatly increases the free area of the rubber, in the case of being pre-compressed and loaded radially, the rubber at the end surfaces is deformed in a manner of getting close parallelly and tightly abutting against parallelly, which effectively prevents the bending deformation of the rubber, thereby eliminating the limitation of the bending of the profiles to the increase of pre-compression amount.

### Brief description of the drawings

Figure 1 is a schematic view showing the structure of a spherical hinge type product in the conventional technology;
Figure 2 is a schematic view showing the structure of the spherical hinge type product in the conventional technology after being pre-compressed;
Figure 3 is a schematic view showing the structure of the spherical hinge type product in the conventional technology under load;
Figure 4 is a schematic view showing the structure of a spherical hinge type product according to the present application;
Figure 5 is a schematic view showing the structure of the spherical hinge type product according to the present application after being pre-compressed;
Figure 6 is a schematic view showing the structure of the spherical hinge type product according to the present application under load;
Figure 7 is a schematic view showing the structure of the spherical hinge type product according to a first embodiment of the present application; and
Figure 8 is a schematic view showing the structure of the spherical hinge type product according to a second embodiment of the present application.

### Detailed description

In order to further understand the present application, preferred implementations of the present application are described below with reference to embodiments, however, it should be understood that these descriptions are only intended to further illustrate the features and advantages of the present application rather than limiting the claims of the present application.

The embodiments of the present application disclose a spherical hinge type rubber elastic element, which includes a spindle, a rubber sleeved on the spindle, and a sleeve sleeved on the rubber. The length of the sleeve is greater than that of the rubber, and the length of the rubber is increased gradually from a side connected to the sleeve to a side connected to the spindle.

The schematic view of the structure of a spherical hinge type rubber elastic element according to the present application is as shown in Figure 4. In Figure 4, 1 indicates a spindle, 2 indicates a rubber sleeved on the spindle 1; 3 indicates a sleeve sleeved on the rubber 2. As illustrated in Figure 4, the length of the sleeve 3 is greater than that of the rubber 2, and the length of the rubber 2 is increased gradually from a side connected to the sleeve 3 to a side connected to the spindle.

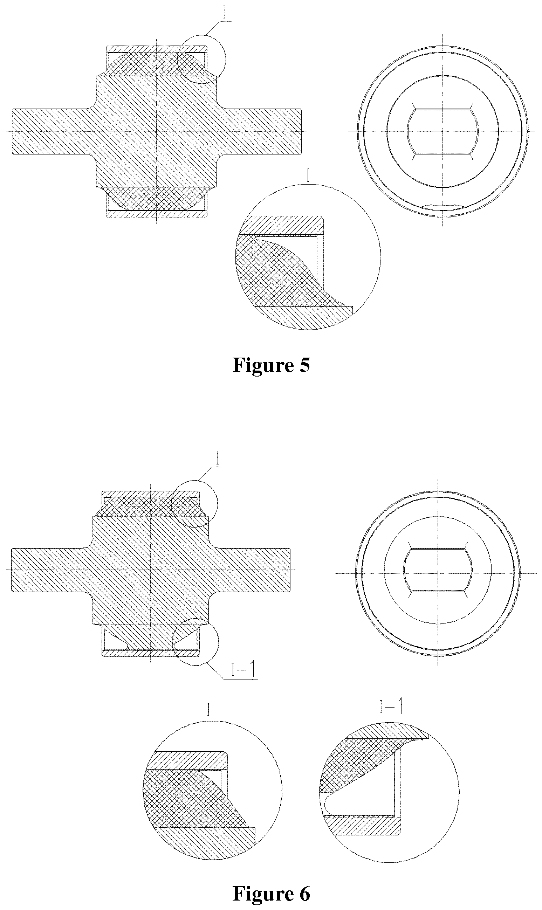

In order to eliminate tensile stress of the rubber and to prevent the product being tensioned during use, the spherical hinge type rubber elastic element is required to be compressed previously to brought the rubber into a compressed state, so as to facilitate later deformation of the rubber under a load, which can prevent the occurrence of tensile fracture of the rubber. Due to the aforementioned improvement to side surfaces of the rubber, after the spherical hinge type rubber elastic element is pre-compressed, the rubber on the side surfaces gets close to the sleeve parallelly, such that the clearance between the rubber and the sleeve is decreased gradually. As shown in Figure 5, after the spherical hinge type rubber elastic element is pre-compressed, the rubber gets close to the sleeve parallelly, as illustrated by I in Figure 5, which may not cause a bending deformation of the rubber.

The side surfaces of the spherical hinge type rubber elastic element according to the present application are improved, such that the length of the sleeve is greater than that of the rubber, and the length of the rubber is increased gradually from a side connected to the sleeve to a side connected to the spindle; that is, the side surfaces of the rubber in the present application are not flush with the sleeve, and the side surfaces of the rubber are at a certain angle with respect to a surface of the sleeve. Also, the end surfaces of the rubber described in the present application are disposed in the above described manner, which is also for the purpose that the rubber gets close to the sleeve parallelly in the process that the rubber is pre-compressed, so as to prevent the rubber from being crumpled and bulged. A beveled edge of the side surface of the rubber may be composed of one or more oblique lines, an angle between a surface of the sleeve and the beveled edge is preferably less than or equal to 45 degrees, and an angle between a surface of the spindle and the beveled edge preferably ranges from 30 degrees to 70 degrees. The beveled edge may also be optimized as a smooth arc. According to the present application, a chamfer is preferably provided at a portion, in contact with the sleeve, of the rubber, that is, at the end surfaces of the rubber, and the size of the chamfer preferably ranges from R0.5 to R4. According to the present application, the length of a surface, in contact with the sleeve, of the rubber preferably ranges from 50% to 80% of the length of the sleeve. According to the present application, the length of a surface, in contact with the spindle, of the rubber is preferably above 90% of the length of the spindle. The rubber according to the present application is axially symmetrically arranged. A hole structure may also be provided on the rubber according to the present application, and a specific shape of the hole structure is not particularly limited in the present application.

In the case that the spherical hinge type rubber elastic element according to the present application is loaded radially, the rubber at the side surfaces continues to get close to the sleeve parallelly, and tightly abuts against the sleeve parallelly, as shown in Figure 6, such that the clearances between the rubber and the sleeve in the radial and axial directions are eliminated gradually, and the contact area of the rubber is increased gradually, thereby achieving the variable stiffness of the spherical hinge type rubber elastic element. In the process that the spherical hinge type rubber elastic element is loaded, the side surfaces of the rubber gradually get close to the sleeve, thereby preventing folding, crumple and bulging phenomena of the rubber.

Since folding, crumple and bulging phenomena of the rubber is avoided by the present application, the design of the pre-compression amount of the spherical hinge type rubber elastic element is not necessarily limited any more, and the unilateral pre-compression amount of the spherical hinge type rubber elastic element according to the present application can reach 25% of the thickness of the rubber.

A spherical hinge type rubber elastic element is provided according to the present application, the profiles of which are improved and have no hole. After the hinge type rubber elastic element according to the present application is pre-compressed, the rubber at the end surfaces may get close to the sleeve parallelly, such that the clearance is decreased gradually; in the case that the spherical hinge type rubber elastic element is loaded radially, the rubber at the end surfaces continues to get close to the sleeve parallelly, and tightly abuts against the sleeve gradually, such that the clearance is eliminated gradually, and the contact area of the rubber is increased gradually, thereby achieving variable stiffness.

The spherical hinge type rubber elastic element according to the present application can eliminate stress concentration of the rubber, dramatically increase the pre-compression amount, prevent tensile fracture of the rubber, and increase stiffness gradually, specifically:
according to the technical solution of the present application, the free area of the rubber is increased greatly; after the pre-compression (as shown in Figure 5) and in the case of being loaded radially (as shown in Figure 6), the profiles of the rubber at the end surfaces are deformed in a manner of getting close parallelly to tightly abut parallelly. Such profile design and deformation manner effectively prevent bending deformation of the rubber, and eliminates the stress concentration phenomenon of the rubber. Since the technical solution of the present application prevents the folding, crumple and bulging phenomena caused by bending deformation of the rubber, the design of the pre-compression amount of the product is no longer limited by the profile of the rubber, and the pre-compression amount can be greatly increased according to actual requirements. Since the pre-compression amount of the product is greatly increased, it can be easily realized that the pre-compression amount of the product is designed to be greater than or equal to the maximum deformation amount of the product in practical use. In this way, the rubber is prevented from being in a tensioned state in use, as illustrated by 1-1 in Figure 6, and thus the defect that the rubber of the spherical hinge product can not withstand tension is really eliminated. The contact area of the rubber is gradually increased with the load, thus the stiffness of the product is increased gradually and uniformly, which facilitates improving of the vibration damping effect of the product, and moreover, it can meet multiple stiffness requirements under multiple loads according to the requirements.

The rubber according to the present application can achieve variable stiffness without being holed. Since a certain degree of variable stiffness can be achieved by tightly abutting the rubber at the end surfaces against the sleeve parallelly (as illustrated by I in Figures 4, 5, and 6), when the degree of variable stiffness is not particularly large, the requirements can be met without being holed, thereby greatly reducing the manufacturing difficulties caused by arranging the hole, reducing the use risk that may be presented in the hole structure.

In order to further understand the present application, the spherical hinge type rubber elastic element according to the present application is described in detail with reference to the following embodiments. The scope of the present application is not limited by the following embodiments.

### First embodiment

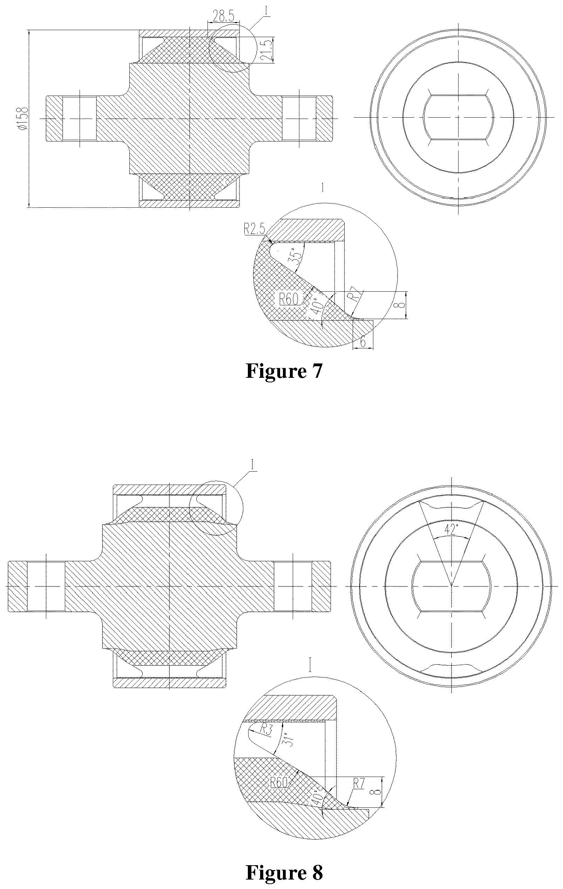

A spherical hinge type rubber elastic element includes a spindle, a rubber sleeved on the spindle, and a sleeve sleeved on the rubber. In an axial direction, the width of the sleeve is greater than that of the rubber, and the width of the rubber is increased gradually from a side connected to the sleeve to a side connected to the spindle, as shown in Figure 7, which is a sectional view and a partially enlarged view of the spherical hinge type rubber elastic element according to this embodiment. As illustrated in Figure 7, according to this embodiment, in the axial direction, an included angle between the rubber and the sleeve is 35 degrees, an included angle between the rubber and the spindle is 40 degrees, and a smooth transition between two oblique lines at different angles is achieved by a chamfer having a radius of R60. Moreover, a chamfer is provided at a portion where the rubber is in contact with the sleeve, and the size of the chamfer is R2.5. The unilateral pre-compression amount of the rubber is 3.5mm, which is 16.3% of the thickness of the rubber.

In this embodiment, with the above design of the side surfaces of the rubber, the unilateral pre-compression amount of the product is increased from 2mm in the conventional technology to 3.5mm, ensuring that the rubber is not subjected to tension in the case that the product is at a maximum deformation of 3.5mm. Moreover, since the bending deformation of the rubber at the end surfaces is eliminated, the stress of the rubber at the end surfaces is declined from 13.22Mpa, which is a value of stress subjected by the conventional structure, to 8.1MPa, and the declining rate is 38.7%, thus the stress has an obvious decline. Further, in this embodiment, the hole structure in the conventional technology is eliminated on the condition that same degree of variable stiffness is achieved, thus reducing the risk of fracture caused by the hole of the rubber. In addition, according to the comparison of fatigue tests, obvious rubber fractures are presented in the conventional structure when the structure has been fatigued for 1.5 million times, and no fracture is presented in the structure according to this embodiment even when the structure has been fatigued for 2.5 million times, which shows that the product according to this embodiment has a significantly improved service life with respect to the conventional structure.

### Second embodiment

A profile design of the rubber at the end surfaces according to the second embodiment is similar to that of the first embodiment, as shown in Figure 8, just the rubber in this embodiment is provided with a hole structure for achieving a greater proportion of variable stiffness. The present application is also applicable to the design of the profile of the rubber at end surfaces of a holed spherical hinge type rubber elastic element.

The above description of examples is only intended to help understanding of the method and core concept of the present application. It should be noted that, for the person skilled in the art, a few of modifications and improvements may be made to the present application without departing from the principle of the present application, and these modifications and improvements are also deemed to fall into the scope of the present application defined by the claims.

Based on the above description of the disclosed embodiments, the person skilled in the art is capable of carrying out or using the present application. It is obvious for the person skilled in the art to make many modifications to these embodiments. The general principle defined herein may be applied to other embodiments without departing from the spirit or scope of the present application. Therefore, the present application is not limited to the embodiments illustrated herein, but should be defined by the broadest scope consistent with the principle and novel features disclosed herein.

## Claims

1. A spherical hinge type rubber elastic element, comprising:
a spindle;
a rubber sleeved on the spindle; and
a sleeve sleeved on the rubber, wherein
the length of the sleeve is greater than the length of the rubber, and the length of the rubber is increased gradually from a side connected to the sleeve to a side connected to the spindle.

2. The spherical hinge type rubber elastic element according to claim 1, wherein an angle between a side surface of the rubber and a surface of the sleeve is less than or equal to 45 degrees.

3. The spherical hinge type rubber elastic element according to claim 2, wherein an angle between the side surface of the rubber and a surface of the spindle ranges from 30 degrees to 70 degrees.

4. The spherical hinge type rubber elastic element according to claim 1, wherein the length of a surface in contact with the sleeve of the rubber ranges from 50% to 80% of the length of the sleeve.

5. The spherical hinge type rubber elastic element according to claim 1, wherein the length of a surface in contact with the spindle of the rubber is above 90% of the length of the spindle.

6. The spherical hinge type rubber elastic element according to claim 1, wherein a chamfer is provided at a portion, in contact with the sleeve, of the rubber and the size of the chamfer ranges from R0.5 to R4.

7. The spherical hinge type rubber elastic element according to any one of claims 1 to 6, wherein the rubber is further provided with a hole structure.
